**Europäisches Patentamt**

**European Patent Office**

**Office européen des brevets**

(11) Numéro de publication : **0 310 521 B1**

(12)

# FASCICULE DE BREVET EUROPEEN

(45) Date de publication du fascicule du brevet :
**03.06.92 Bulletin 92/23**

(51) Int. Cl.⁵ : **F16K 1/226**

(21) Numéro de dépôt : **88402479.5**

(22) Date de dépôt : **30.09.88**

(54) **Dispositif d'étanchéité pour vanne à papillon.**

(30) Priorité : **02.10.87 FR 8713659**

(43) Date de publication de la demande :
**05.04.89 Bulletin 89/14**

(45) Mention de la délivrance du brevet :
**03.06.92 Bulletin 92/23**

(84) Etats contractants désignés :
**DE ES FR GB IT**

(56) Documents cités :
**AT-B- 339 107**
**FR-A- 2 234 499**
**FR-A- 2 288 259**
**US-A- 1 591 903**
**US-A- 3 556 475**
**US-A- 3 586 290**

(73) Titulaire : **ABG SEMCA S.A.**
**408, avenue des Etats-Unis**
**F-31016 Toulouse Cédex (FR)**

(72) Inventeur : **Strickler, Philippe**
**THOMSON-CSF SCPI 19, avenue de Messine**
**F-75008 Paris (FR)**
Inventeur : **Renaux, Jean-Michel**
**THOMSON-CSF SCPI 19, avenue de Messine**
**F-75008 Paris (FR)**

(74) Mandataire : **Ruellan-Lemonnier, Brigitte et al**
**THOMSON-CSF SCPI**
**F-92045 PARIS LA DEFENSE CEDEX 67 (FR)**

## Description

La présente invention concerne un dispositif d'étanchéité pour vanne du type vanne à papillon.

Les vannes à papillon sont utilisées notamment dans les circuits de circulation de fluide pour interrompre ou non la circulation du fluide dans au moins une partie du circuit. Pour obtenir un fonctionnement correct de ce type de vanne, une bonne étanchéité doit être obtenue en position fermée entre l'organe d'obturation ou papillon et le corps de vanne.

A cet effet, on utilise le plus souvent un segment d'étanchéité constitué par un joint circulaire continu. Ce joint circulaire est monté dans une gorge réalisée à la périphérie du papillon et vient en contact, en position fermée, avec une portée cylindrique du corps de vanne.

Un tel segment d'étanchéité présente un certain nombre d'inconvénients. Il existe notamment des fuites résiduelles, le fluide s'écoulant en partie entre le segment et la gorge du papillon. D'autre part, l'utilisation d'un joint annulaire continu pose des problèmes de montage. En général, le corps du papillon doit être usiné pour réaliser une partie de la gorge et un flasque supplémentaire est rapporté sur le papillon pour maintenir le segment en place.

De plus, lorsque la vanne papillon doit être utilisée dans des circuits de circulation de fluide devant fonctionner à des pressions étendues pouvant varier entre 500 millibars et 24 bars et pour des températures pouvant varier entre la température ambiante et 600°C, il est difficile de réaliser un segment d'étanchéité fonctionnant correctement pour l'ensemble des pressions et des températures ci-dessus. En effet, le compromis obtenu entre fuite minimale et couple de manoeuvre du papillon se modifie en fonction des températures et des pressions.

On a aussi proposé dans le brevet AT-B-339 107 une bague d'étanchéité fendue pour vanne d'arrêt sollicitée par un ensemble de moyens élastiques coopérant les uns avec les autres pour obtenir l'étanchéité. Ce type de bague ne permet pas d'obtenir une bonne adaptation aux variations des pressions et des températures.

Un but de la présente invention est donc de réaliser un dispositif d'étanchéité pour vanne du type vanne à papillon qui assure une étanchéité correcte sous une pression pouvant varier entre quelque centaines de millibars et quelques dizaines de bars et pour des températures comprises entre la température ambiante et plusieurs centaines de degrés.

Un autre but de la présent invention est de réaliser un dispositif d'étanchéité dans lequel la partie du segment d'étanchéité en contact avec le corps de vanne est appliquée fortement contre le corps de vanne pour assurer une meilleure étanchéité.

Un but supplémentaire de la présente invention est de réaliser un dispositif comprenant un segment d'étanchéité monté dans une gorge réalisée sur la périphérie du papillon de manière à obtenir des fuites minimales.

En conséquence, la présente invention a pour object un dispositif d'étanchéité assurant l'étanchéité entre le papillon et le corps de vanne d'une vanne à papillon pour une gamme de pressions et de températures importante, comportant un segment d'étanchéité monté dans une gorge réalisée sur la périphérie du papillon, ledit segment comprenant un joint annulaire fendu coopérant avec des moyens élastiques, caractérisé en ce que les moyens élastiques sont constitués par un premier moyen élastique forçant radialement le joint contre le corps de vanne et par un deuxième moyen élastique distinct du premier et forçant axialement le joint contre la gorge du papillon, les moyens élastiques étant agencés séparément dans ladite gorge de manière à ne pas avoir l'un sur l'autre d'interaction directe et étant réalisés en un matériau réfractaire présentant de bonnes caractéristiques de résistance à la fatigue.

Selon un mode de réalisation préférentiel, le premier moyen élastique est constitué par une lame ondulée positionnée dans le fond de la gorge et le deuxième moyen élastique est constitué par une rondelle ondulée positionnée entre une des parois de la gorge et le joint annulaire. L'utilisation de ces deux moyens élastiques permet d'avoir un bon contact entre le papillon et le segment et entre le segment et le corps de vanne de manière à éviter toute fuite de fluide entre le papillon et le corps de vanne et à l'intérieur de la gorge de montage du segment.

D'autre part, l'utilisation des deux moyens élastiques permet une meilleure adaptation aux variations de pression et de température.

Le matériau réfractaire et présentant de bonnes caractéristiques de résistance à la fatigue pour réaliser les moyens élastiques est constitué par exemple par un alliage à base de nickel-chrome, de préférence un alliage nickel-chrome comportant 52% de nickel. Un tel alliage est vendu sous la marque INCONEL 718 par TELEDYNE RODNEY METALS. Cet alliage peut supporter des températures de 600°C et des pressions de 24 bars.

Selon un mode de réalisation préférentiel, le joint annulaire fendu comporte une base annulaire se prolongeant vers l'extérieur par une lèvre destinée à être appliquée contre le corps de vanne, ledit joint présentant une section en coupe sensiblement en forme de L.

Selon une autre caractéristique de la présente invention, pour obtenir une meilleure étanchéité, l'extrémité de la lèvre du joint annulaire a une forme torique. De même la base annulaire et la lèvre sont raccordées l'une à l'autre par un profil arrondi, ce qui permet d'éviter les fuites entre le papillon et le segment en assurant un bon contact entre ces deux éléments.

D'autre part, pour résister aux variations de pression et aux variations de température, le joint annulaire est réalisé en un alliage à base de cobalt. Un tel alliage est réfractaire, inoxydable et présente de bonnes caractéristiques de frottement.

D'autres caractéristiques et avantages de la présente invention apparaîtront à la lecture de la description d'un mode de réalisation faite avec référence aux dessins ci-annexés dans lesquels :

– la figure 1 est une vue schématique d'une vanne à papillon dans laquelle le papillon est en position ouverte ;

– la figure 2 est une vue en plan de dessus d'un papillon utilisable dans la présente invention ;

– la figure 3 est une vue en coupe par A-A de figure 2 représentant un segment d'étanchéïté conforme à la présente invention ;

– la figure 4 est une vue en coupe schématique d'une partie de la lame élastique utilisée avec le segment d'étanchéïté de figure 3.

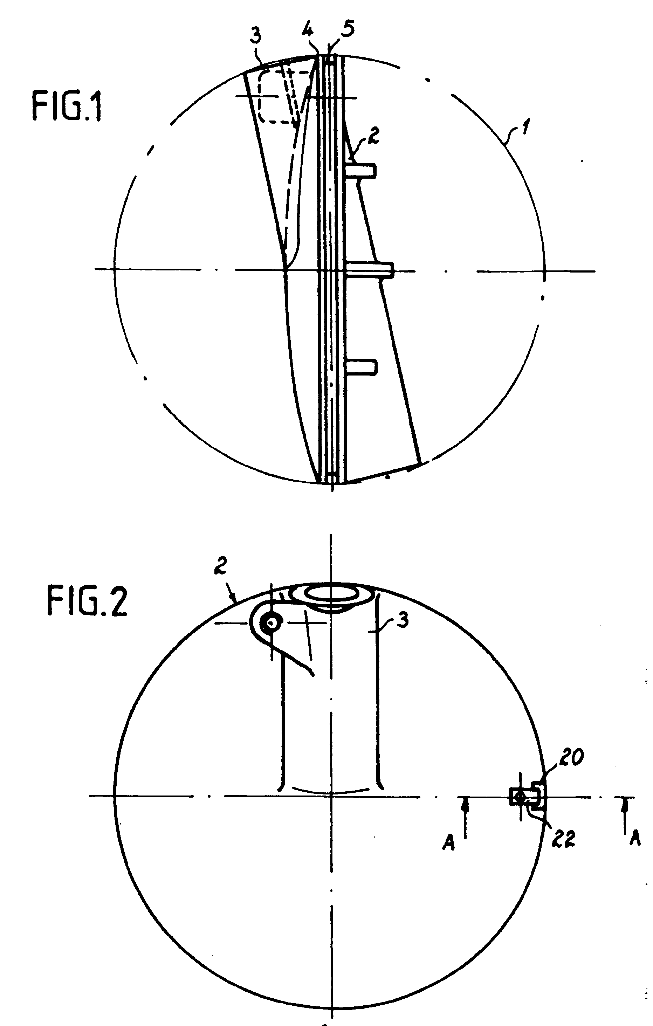

Comme représenté schématiquement sur la figure 1, une vanne à papillon est constituée essentiellement d'un corps de vanne 1 délimité intérieurement par un cylindre à section circulaire dans lequel est monté un dispositif d'obturation 2 ou papillon.

Comme représenté sur la figure 2, le papillon est constitué par un disque plat de forme circulaire dans le mode de réalisation représenté. Ce disque plat est fixé sur le corps de vanne 1 par l'intermédiaire d'un axe monté dans un arbre creux 3 réalisé sur le disque. Ainsi la fermeture ou l'ouverture du papillon est obtenue par rotation du disque autour de cet axe. Comme représenté sur la figure 1, le disque comporte à sa périphérie 4 une gorge 5 destinée à recevoir un segment d'étanchéïté comme cela sera décrit ci-après.

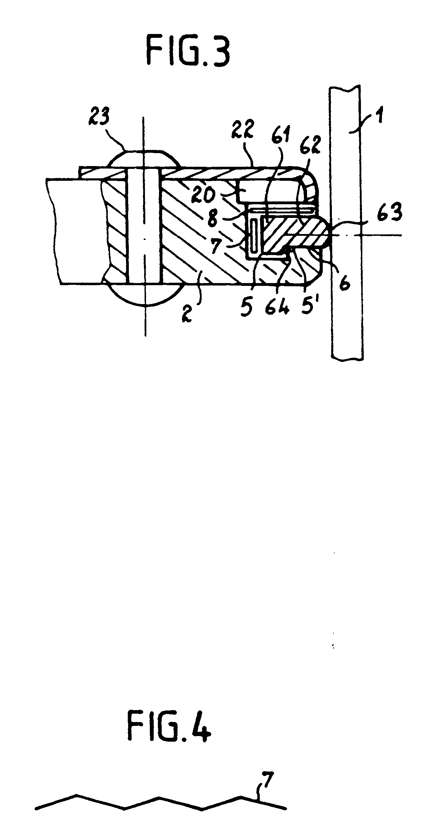

Le segment d'étanchéïté conforme à la présente invention est représenté sur la figure 3. Ce segment est constitué par un joint annulaire fendu 6 coopérant avec deux moyens élastiques 7,8 appliquant respectivement le joint contre le corps de vanne 1 et contre une des faces latérales 5' de la gorge 5. Le joint annulaire 6 comporte, de préférence, une base annulaire 61 se prolongeant vers l'extérieur par une lèvre 62 destinée à être appliquée contre le corps de vanne 1. Ainsi, le joint présente une section en coupe sensiblement en forme de L. Ce joint est inséré dans la gorge. La gorge 5 a été usinée de manière à présenter un talon 5'. Ce talon permet le maintien en position du segment d'étanchéïté lorsque le papillon est en position ouverte. Pour obtenir un meilleur contact entre le joint annulaire et le corps de vanne, l'extrémité 63 de la lèvre 62 présente une forme torique. Ceci permet une meilleure adaptation en fonction des pressions exercées. D'autre part, pour éviter toute fuite de fluide à l'intérieur de la gorge notamment entre le talon 5' et le segment, la base annulaire 61 et la lèvre 62 sont raccordées l'une à l'autre par un profil arrondi 64.

Conformément à la présente invention, le moyen élastique 7 est constitué par une lame ressort, de préférence par une lame ondulée comme représenté sur la figure 4. Cette lame ondulée est positionnée dans le fond de la gorge 5. Le deuxième moyen élastique 8 est constitué par une rondelle ondulée en un matériau élastique. Cette rondelle en un matériau élastique présente une section en coupe similaire à celle de la lame ondulée. La rondelle 8 est positionnée entre une des parois de la gorge et le joint annulaire 6. Pour permettre son montage dans la gorge, la rondelle a été fendue. D'autre part, comme représenté sur la figure 3, le disque du papillon 2 comporte sur une faible partie de sa circonférence un évidement 20, et une lame 22, fixée par une goupille 23, vient maintenir la rondelle 8 en position au niveau de l'évidement 20.

Pour assurer une étanchéïté correcte pour une gamme de températures et de pressions importante, les deux moyens élastiques sont réalisés, conformément à l'invention, en un matériau réfractaire et présentant de bonnes caractéristiques de résistance à la fatigue. Ainsi, pour obtenir une vanne permettant un fonctionnement à des températures variant entre la température ambiante et 600°C ainsi qu'à des pressions variant entre 500 millibars et 24 bars, la lame et la rondelle ondulées sont réalisées en un alliage à base de nickel-chrome, de préférence un alliage contenant 52% de nickel tel que celui vendu sous la marque INCONEL 718. Cet alliage garde de bonnes caractéristiques en température. Il est inoxydable et présente une bonne résistance à la fatigue. D'autre part, le joint annulaire est réalisé, de préférence, en un alliage à base de cobalt tel que l'alliage vendu sous la marque ALACRITE 554 ou 602 ou sous la marque HAYNES 25. Ce type d'alliage présente de nombreux avantages. Il est notamment très réfractaire. Il présente de bonnes caractéristiques de frottement et ne grippe pas lorsque deux matériaux inoxydables sont en contact.

L'invention a été décrite en se référant à un mode de réalisation particulier. Il est évident pour l'homme de l'art qu'elle peut présenter de nombreuses variantes notamment en ce qui concerne la fixation du segment d'étanchéïté à l'intérieur de la gorge, le mode de réalisation de la rondelle et de la lame élastiques, les matériaux utilisés.

## Revendications

1. Dispositif d'étanchéïté assurant l'étanchéïté entre le papillon et le corps de vanne d'une vanne à papillon pour une gamme de pressions et de températures importante, comportant un segment d'étanchéïté monté dans une gorge (5) réalisée sur la périphérie du papillon, ledit segment comprenant un joint annulaire (6) fendu coopérant avec des moyens élastiques, caractérisé en ce que les moyens élastiques sont constitués par un premier moyen élastique (7) forçant radialement le joint contre le corps de vanne et par un deuxième moyen élastique (8) distinct du premier (7) et forçant axialement le joint contre la gorge, les moyens élastiques étants agencés séparément dans ladite gorge (5) de manière à ne pas avoir l'un sur l'autre d'interaction directe et étant réalisés en un matériau réfractaire présentant de bonnes caractéristiques de résistance à la fatigue.

2. Dispositif d'étanchéïté selon la revendication 1, caractérisé en ce que le premier moyen élastique (7) est constitué par une lame ondulée positionnée dans le fond de la gorge.

3. Dispositif d'étanchéïté selon la revendication 1, caractérisé en ce que le deuxième moyen élastique (8) est constitué par une rondelle ondulée positionnée entre une des parois latérales de la gorge et le joint annulaire.

4. Dispositif d'étanchéïté selon la revendication 1, caractérisé en ce que le matériau réfractaire est constitué par un alliage à base de nickel-chrome.

5. Dispositif d'étanchéïté selon la revendication 1, caractérisé en ce que le joint annulaire (6) comporte une base annulaire (61) se prolongeant vers l'extérieur par une lèvre (62) destinée à être appliquée contre le corps de vanne, ledit joint présentant une section en coupe sensiblement en forme de L.

6. Dispositif d'étanchéïté selon la revendication 5, caractérisé en ce que l'extrémité de la lèvre a une forme torique.

7. Dispositif d'étanchéïté selon la revendication 5, caractérisé en ce que la base annulaire et la lèvre sont raccordées l'une à l'autre par un profil arrondi (64).

8. Dispositif d'étanchéïté selon la revendication 1, caractérisé en ce que le joint annulaire est réalisé en un alliage à base de cobalt.

**Patentansprüche**

1. Dichtvorrichtung, die die Dichtheit zwischen der Ventilklappe und dem Ventilkörper eines Klappenventils für einen großen Druck- und Temperaturbereich bewirkt, mit einem Dichtsegment, das in einer Kehle (5) angeordnet ist, die auf dem Umfang der Ventilklappe eingearbeitet ist, wobei das Segment eine geschlitzte Ringdichtung (6) aufweist, die mit elastischen Mitteln zusammenwirkt, dadurch gekennzeichnet, daß die elastischen Mittel aus einem ersten elastischen Mittel (7), das die Dichtung radial gegen den Ventilkörper drückt, und aus einem zweiten, vom ersten (7) verschiedenen elastischen Mittel (8) bestehen, das die Dichtung axial gegen die Kehle drückt, wobei die elastischen Mittel getrennt in dieser Kehle (5) angeordnet sind, so daß sie nicht direkt aufeinander einwirken, und aus einem hitzebestindigen Material hergestellt sind, das gute Eigenschaften bezüglich Materialermüdung aufweist.

2. Dichtvorrichtung nach Anspruch 1, dadurch gekennzeichnet, daß das erste elastische Mittel (7) aus einer gewellten Lamelle besteht, die am Boden der Kehle angeordnet ist.

3. Dichtvorrichtung nach Anspruch 1, dadurch gekennzeichnet, daß das zweite elastische Mittel (8) aus einer gewellten Ringscheibe besteht, die zwischen einer der Seitenwinde der Kehle und der Ringdichtung angeordnet ist.

4. Dichtvorrichtung nach Anspruch 1, dadurch gekennzeichnet, daß das hitzebeständige Material aus einer Nickel-Chromlegierung besteht.

5. Dichtvorrichtung nach Anspruch 1, dadurch gekennzeichnet, daß die Ringdichtung (6) eine Ringbasis (61) aufweist, die sich nach außen hin durch eine Lippe (62) verlängert, die bestimmt ist, sich gegen den Ventilkörper anzulegen, wobei diese Dichtung einen im wesentlichen L-förmigen querschnitt aufweist.

6. Dichtvorrichtung nach Anspruch 5, dadurch gekennzeichnet, daß das Ende der Lippe Torusform hat.

7. Dichtvorrichtung nach Anspruch 5, dadurch gekennzeichnet, daß die ringförmige Basis und die Lippe durch ein abgerundetes Profil (64) miteinander verbunden sind.

8. Dichtvorrichtung nach Anspruch 1, dadurch gekennzeichnet, daß die Ringdichtung aus einer Kobaltlegierung besteht.

**Claims**

1. A sealing device ensuring the tightness between the flap and the valve body of a flap valve for an important pressure and temperature range, comprising a sealing segment mounted in a groove (5) realised on the periphery of the flap, said segment comprising a slit annular joint (6) co-operating with resilient means, characterized in that the resilient means are constituted by a first resilient means (7) radially forcing the joint against the valve body, and by a second resilient means (8) distinct of the first one (7) and axially forcing the joint against the groove, the resilient means being mounted separately in said groove (5) so as not to directly interact and being made from a refractory material presenting good resistance against material fatigue.

2. A sealing device according to claim 1, characterized in that the first resilient means (7) is constituted by an undulated strip positioned at the bottom of the groove.

3. A sealing device according to claim 1, characterized in that the second resilient means (8) is constituted by an undulated washer positioned between the side walls of the groove and the annular joint.

4. A sealing device according to claim 1, characterized in that the refractory material is constituted of an alloy on the basis of nickel-chromium.

5. A sealing device according to claim 1, characterized in that the annular joint (6) comprises an annular base (61) extending towards the outside via a lip (62) which is intended to be applied against the valve body, said joint presenting an essentially L-shaped cross-section.

6. A sealing device according to claim 5, characterized in that the end of the lip is torus-shaped.

7. A sealing device according to claim 5, characterized in that the annular base and the lip are connected to each other by a rounded profile (64).

8. A sealing device according to claim 1, characterized in that the annular joint is made of an alloy on the basis of cobalt.

FIG.1

FIG.2

# FIG.3

# FIG.4